# EUROPÄISCHE PATENTSCHRIFT

(11) **EP 3 325 286 B1**
(45) Veröffentlichungstag und Bekanntmachung des Hinweises auf die Patenterteilung: **08.05.2019**
(21) Anmeldenummer: 16708149.6
(22) Anmeldetag: 07.03.2016
(51) Int. Cl.: B60C 19/08, B60C 9/18, B60C 9/00, B60C 11/00

(54) **FAHRZEUGLUFTREIFEN**
PNEUMATIC VEHICLE TIRE
PNEUMATIQUE DE VÉHICULE

(30) Priorität: 17.07.2015 DE 102015213497
(43) Veröffentlichungstag der Anmeldung: 30.05.2018
(73) Patentinhaber: Continental Reifen Deutschland GmbH, 30165 Hannover (DE)
(72) Erfinder: BINDER, Axel, 30161 Hannover (DE); BOLZ, Gerrit, 31535 Neustadt am Rübenberge (DE)
(74) Vertreter: Finger, Karsten
(86) Internationale Anmeldenummer: PCT/EP2016/054720
(87) Internationale Veröffentlichungsnummer: WO 2017/012719

(56) Entgegenhaltungen:
- EP-B1- 1 475 248
- DE-A1-102012 009 829
- JP-A- 2014 015 094
- JP-A- 2015 013 633

## Beschreibung

Die Erfindung betrifft einen Fahrzeugluftreifen nach dem Oberbegriff des Patentanspruches 1.

Im Betrieb können sich Kraftfahrzeuge elektrostatisch aufladen. Dies geschieht beispielsweise durch mechanische Reibung zweier Komponenten aneinander, wie zum Beispiel eine rotierende Welle im Getriebe, oder auch durch die Reibung der Laufflächen der Fahrzeugluftreifen beim Abrollen auf der Straße. Normalerweise wird die elektrostatische Ladung über die Fahrzeugluftreifen an die Straße abgegeben. Dies ist möglich, da diese unter anderem aus elektrisch leitenden Materialien, insbesondere Gummimischungen, bestehen. Wird die elektrostatische Aufladung nicht von dem Kraftfahrzeug abgeführt, kann zum Beispiel die Elektronik des Kraftfahrzeuges beeinträchtigt werden. Für den elektrischen Widerstand eines Kraftfahrzeuges gibt es gesetzliche Vorgaben. Der Gesamtwiderstand, gemessen zwischen der Lauffläche des Fahrzeugluftreifens und der Felge, sollte nicht mehr als 10⁺⁶ Ω betragen, das heißt der Fahrzeugluftreifen muss leitfähig sein.

Weiterhin ist es bekannt, dass durch die Verwendung von Material mit einem hohen Siliziumdioxid-Anteil, vor allem in der Gummimischung des Laufstreifens, die grundsätzlichen Eigenschaften des Fahrzeugluftreifens, wie zum Beispiel Grip, Rollwiderstand und Elastizität, verbessert werden können. Der Einsatz von Siliziumdioxid (Sio2), das auch als "Silica" oder "Kieselsäure" bezeichnet wird, stabilisiert das Netz der Verbindungen zwischen den einzelnen Stoffen einer Gummimischung. Im Vergleich zur herkömmlichen Struktur mit zwei Knoten (Schwefel und Kohlenstoff) erhöht die auf diese Weise ausgebildete Dreiknoten-Struktur (Schwefel, Kohlenstoff, und Silikat) die Festigkeit des Materials. Weiterhin wird durch den Einsatz von Siliziumdioxid die Haftung des Fahrzeugluftreifens auf der Fahrbahn verbessert, da die Gummimischung wegen der höheren Festigkeit weicher ausgelegt werden kann.

Die Verwendung von Siliziumdioxid hat jedoch den Nachteil, dass die elektrische Leitfähigkeit des Fahrzeugluftreifens abnimmt. Da die elektrostatischen Aufladungen im Wesentlichen über die Fahrzeugluftreifen von dem Kraftfahrzeug abgeleitet werden, ist die Verwendung des weniger oder nur schwach leitfähigen Siliziumdioxids also problematisch. Mit zunehmendem Siliziumdioxid-Anteil in der Gummimischung des Laufstreifens weist der Fahrzeugluftreifen eine geringere elektrische Leitfähigkeit beziehungsweise einen größeren elektrischen Widerstand auf, als Fahrzeugluftreifen mit einem höheren Ruß-Anteil im Laufstreifen.

Ein Fahrzeugluftreifen mit den voranstehend beschriebenen Eigenschaften umfasst zumindest einen Laufstreifen mit einer äußeren elektrisch nicht-leitenden Laufstreifenkappe mit einer profilierten Lauffläche und einer inneren Laufstreifenbasis sowie eine nicht-leitende Gürtelbandage als gewebeartige Zwischenlage zwischen Laufstreifenbasis und dem darunter angeordneten Gürtel. Der Siliziumdioxid-Anteil im Fahrzeugluftreifen wird insbesondere mittels der Gürtelbandage aus Siliziumdioxid erhöht, wodurch die Eigenschaften des Fahrzeugluftreifens verbessert werden. Die Laufstreifenbasis und die Laufstreifenkappe werden in Fachkreisen auch als "Base" beziehungsweise "Cap" bezeichnet.

Zur Verbesserung der elektrischen Leitfähigkeit ist es bereits bekannt, an der Basis des Laufstreifens mehrere elektrisch leitende Leitfähigkeitsstreifen, sogenannte "carbon center beams" (CCB), auszubilden. Diese Leitfähigkeitsstreifen reichen in radialer Richtung von der Basis durch die äußere Laufstreifenkappe bis zur Lauffläche und stellen so eine elektrische Verbindung zur Straßenoberfläche her. Weiterhin ist es bekannt, in der elektrisch nicht-leitenden Gürtelbandage eine Vielzahl von Lücken beziehungsweise Spalte auszubilden, welche die elektrische Verbindung des Fahrzeugluftreifens zur Straßenoberfläche überbrücken.

Aus der DE 198 50 766 84 ist ein Fahrzeugluftreifen mit einem Gürtel und mit einem zwischen Gürtel und Lauffläche angeordneten Laufstreifen bekannt. Der Laufstreifen ist aus einer radial äußeren und einer radial inneren Gummilage aufgebaut, wobei die radial innere Gummilage zwei Bereiche aus unterschiedlichen Kautschukmischungen aufweist. Zusätzlich ist ein weiterer Bereich ausgebildet, welcher sich vom Gürtel bis zur Lauffläche erstreckt und aus einer leitfähigen Kautschukmischung mit einem hohen Rußanteil besteht. Die radial äußere Gummilage entspricht hierbei der nicht-leitenden Laufstreifenkappe und die radial innere Gummilage der leitenden Laufstreifenbasis. Der weitere Bereich stellt eine elektrisch leitende Verbindung zwischen der Basis und der Lauffläche des Fahrzeugluftreifens beziehungsweise der Straßenoberfläche her.

Des Weiteren ist aus der EP 0 718 127 B1 beziehungsweise deren Übersetzung DE 695 09 623 T2 ein Fahrzeugluftreifen mit einem Laufstreifen aus einem elektrisch nicht- oder nur schlecht leitenden Material mit einer profilierten Lauffläche und einer inneren elektrischleitenden Laufstreifenbasis bekannt. Der hier beschriebene Fahrzeugluftreifen zeichnet sich durch mindestens eine radial vorstehende, einstückig ausgebildete Verlängerung der Laufstreifenbasis aus, die sich von der Laufstreifenbasis radial nach außen zur Lauffläche erstreckt.

Im Übrigen ist aus der EP 1 475 248 B1 noch ein Fahrzeugluftreifen bekannt, enthaltend eine Gürtelbandage aus einer Lage mit in eine unvulkanisierte Kautschukmischung eingebetteten Festigkeitsträgern, wobei die Festigkeitsträger innerhalb der Lage im Wesentlichen parallel zueinander verlaufen und Hybridcorde sind, die aus einem ersten verdrehten Garn mit einem hohen Elastizitätsmodul und einem zweiten verdrehten Garn mit einem niedrigen Elastizitätsmodul, die miteinander endverdreht sind, aufgebaut sind.

Die JP 2014015094 A betrifft einen Fahrzeugluftreifen mit einem Laufstreifen mit einer äußeren Laufstreifenkappe, die ihrerseits über eine profilierte Lauffläche verfügt, wobei ferner eine innere Laufstreifenbasis und ein elektrisch leitender Leitfähigkeitsstreifen vorhanden sind. Der Leitfähigkeitsstreifen reicht, in radialer Richtung betrachtet, von der Laufstreifenbasis durch die Laufstreifenkappe hindurch, bis zur freien Außenseite der Lauffläche. Eine unter der Laufstreifenbasis angeordnete, elektrisch nicht-leitende Gürtelbandage ist dabei mit einer Vielzahl Lücken ausgestattet und darunter befindet sich ein mehrlagiger Gürtel sowie eine Karkasse. Der Fahtrzeugluftreifen nach der genannten Druckschrift weist ferner in an sich bekannter Weise Seitenwände auf. Die Lücken in der Gürtelbandage sind mit einem elektrisch leitenden Material gefüllt.

Auch aus der DE 10 2012 009 829 A1 geht ein Fahrzeugluftreifen hervor, der einen Laufstreifen mit einer äußeren Laufstreifenkappe aufweist, die ihrerseits über eine profilierte Lauffläche verfügt, wobei ferner eine innere Laufstreifenbasis und ein elektrisch leitender Leitfähigkeitsstreifen vorhanden sind. Der Leitfähigkeitsstreifen reicht, in radialer Richtung betrachtet, von der Laufstreifenbasis durch die Laufstreifenkappe hindurch, bis zur freien Außenseite der Lauffläche und besteht hierbei bevorzugt aus elektrisch leitfähigem Kohlenstoff.

Eine ähnliche Lösung ist auch aus der JP 2015 013633 A bekannt. Der vorhandene Leitfähigkeitsstreifen reicht hierbei ebenfalls, in radialer Richtung betrachtet, von der Laufstreifenbasis durch die Laufstreifenkappe hindurch, bis zur freien Außenseite der Lauffläche und verläuft, bezogen auf einen Querschnitt durch den Fahrzeugluftreifen, mäanderförmig. Eine separate Laufstreifenkappe ist bei der in dieser Druckschrift vorgestellten Lösung nicht vorhanden.

Der Erfindung liegt die Aufgabe zugrunde, einen Fahrzeugluftreifen mit verbesserter elektrischer Leitfähigkeit zu schaffen, ohne dabei die weiteren Eigenschaften des Fahrzeugluftreifens zu beeinträchtigen.

Die Erfindung löst diese Aufgabenstellung mit den kennzeichnenden Merkmalen des Patentanspruches 1.
Weitere Ausgestaltungen der Erfindung sind Gegenstand der Unteransprüche.

Ein Fahrzeugluftreifen, zumindest aufweisend einen Laufstreifen mit einer äußeren Laufstreifenkappe ("Cap", im Folgenden auch kurz "Kappe" genannt) mit einer profilierten Lauffläche, einer inneren Laufstreifenbasis ("Base", im Folgenden auch kurz "Basis" genannt) und mindestens einem elektrisch leitenden Leitfähigkeitsstreifen, welcher in radialer Richtung von der Laufstreifenbasis durch die Laufstreifenkappe bis zur Lauffläche reicht, eine unter der Laufstreifenbasis angeordnete, elektrisch nicht-leitende Gürtelbandage mit einer Vielzahl an Lücken, einen mehrlagigen Gürtel, eine Karkasse und Seitenwände, wurde erfindungsgemäß dahingehend verbessert, dass die Lücken in der Gürtelbandage mit einem elektrisch leitenden Material gefüllt sind, bei dem es sich um dasselbe elektrisch leitende Material handelt, aus dem auch die Laufstreifenbasis besteht. Bei dem erfindungsgemäßen Fahrzeugluftreifen wird die Lauffläche des Fahrzeugluftreifens von der Kappe ausgebildet, welche herkömmlicherweise aus einer nicht-leitenden Gummimischung besteht. Unter der Kappe ist die Basis des Laufstreifens angeordnet. Diese kann beispielsweise aus zumindest einer mit Ruß gefüllten Gummimischung gebildet sein und ist somit leitfähig. An der Basis ist mindestens ein elektrisch leitender Leitfähigkeitsstreifen, kurz CCB, ausgebildet. Die Basis ist aus einem leitenden Material ausgebildet und der Leitfähigkeitsstreifen kann aus dem gleichen leitenden Material wie die Basis gebildet sein. Insbesondere können in dieser Ausgestaltung dann die Leitfähigkeitsstreifen und die Basis als ein Bauteil, also einstückig, ausgebildet werden. Die Leitfähigkeitsstreifen ragen von der Basis durch die Kappe in radialer Richtung bis zur äußeren Lauffläche des Fahrzeugluftreifens und stellen so einen elektrischen Kontakt zur Straßenoberfläche bereit. Bei den erfindungsgemäßen Fahrzeugluftreifen ist unterhalb der Basis, das heißt zwischen der Basis und dem Gürtel, noch die nicht-leitende Gürtelbandage angeordnet. Die Gürtelbandage ist aus einem nicht-leitenden Material ausgebildet, insbesondere aus einer zumindest Siliziumdioxid aufweisenden Gummimischung. Realisierbar ist das Merkmal der Erfindung, nach dem die Lücken in der Gürtelbandage mit einem elektrisch leitenden Material gefüllt sind, bei dem es sich um dasselbe elektrisch leitende Material handelt, aus dem auch die Laufstreifenbasis besteht, zum Beispiel dadurch, dass beim Herstellungsprozess des Fahrzeugluftreifens die Basis auf die Gürtelbandage aufgebracht wird und die Gummimischung der Basis in die Lücken der Gürtelbandage eindringt.

Um die elektrische Leitfähigkeit des Fahrzeugluftreifens auch bei einem hohen Siliziumdioxid-Anteil zu gewährleisten, weist die Gürtelbandage eine Vielzahl von Lücken, Löchern oder Spalten auf. Im Rahmen dieser Erfindung wird unter dem Begriff Lücke eine durch die Gürtelbandage durchgehende Aussparung verstanden. Durch diese Lücken wird ein elektrischer Kontakt zwischen Gürtel und Basis beziehungsweise mittels der Leitfähigkeitsstreifen weiter zur Straßenoberfläche hergestellt. Die elektrostatische Aufladung des Fahrzeuges kann somit auch bei Fahrzeugluftreifen, die hauptsächlich aus einem weniger oder nicht leitfähigen Material bestehen, vorteilhaft an die Straßenoberfläche abgeleitet werden.

Erfindungsgemäß sind die Lücken zur weiteren Verbesserung der elektrischen Leitfähigkeit des Fahrzeugluftreifens mit einem elektrisch leitenden Material gefüllt. Dabei sieht eine allgemeine Ausgestaltung der Erfindung vor, dass die Lücken mit einer elektrisch leitfähigen Gummimischung gefüllt sind, aus welcher auch die Laufstreifenbasis besteht.

Die Gürtelbandage ist bevorzugt als Gewebe ausgebildet. Bei der Herstellung des Fahrzeugluftreifens wird die Gürtelbandage um den Gürtel des Fahrzeugluftreifens gewickelt beziehungsweise aufgespult. Dabei entsteht das erfindungsgemäße Spulbild der Gürtelbandage aus Gewebefasern und Lücken. Eine Ausgestaltung sieht vor, dass die Gürtelbandage mindestens eine Lage eines Gewebes aufweist. Bevorzugt wird erfindungsgemäß eine Gürtelbandage mit ein oder zwei Lagen. Das Gewebe der Gürtelbandage kann zum Beispiel aus einem der folgenden Materialien ausgebildet sein: Nylon (N) oder Hybridmaterialien aus Nylon (N) und Aramid (A). Beispielsweise eignet sich Nylon mit einer Stärke beziehungsweise Feinheit, gemessen in dtex, von N470x2, N940x1, N940x2, N1400x1, N1400x2 oder als Hybridmaterial A1680x2/N470x1, A1680x1/N1100x1, A1100x1/N1100x1, wobei die Angabe x1 für einen Einfachcord und x2 für einen Zweifachcord steht.

Die Lücken in der Gürtelbandage bilden vorteilhaft eine Gesamtfläche von mindestens 10 mm² aus. Das heißt, es sind vorteilhaft mindestens 10 mm² des Gürtels zwischen den äußeren Enden des Spulbildes über den gesamten Umfang des Fahrzeugluftreifens sichtbar, also nicht von der Gürtelbandage bedeckt.

Eine Ausgestaltung dessen sieht ferner vor, dass im Zentrum der Gürtelbandage genau eine Lage ausgebildet ist und die Gürtelbandage eine Fläche von 30 bis 99 % des Laufstreifens bedeckt. Unter Zentrum wird hier ein Bereich verstanden, welcher mindestens 10 mm von den äußeren Enden des Gürtels entfernt ist.

Eine andere Ausgestaltung besteht darin, dass im Zentrum der Gürtelbandage ein oder zwei Lagen ausgebildet sind und insgesamt eine Fläche von 95 bis 190% bedeckt ist. Die Prozentangabe von 190% soll hierbei verdeutlichen, dass bestimmte Bereiche der Gürtelbandage auch von beiden Lagen bedeckt sind.

Die Lücken können in Umfangsrichtung des Fahrzeugluftreifens durchgehend ausgebildet sein. Beispielsweise sind die Lücken in Umfangsrichtung spiralförmig, das heißt mit axialem Versatz, oder ringförmig, das heißt ohne axialen Versatz, ausgebildet. Dies ist abhängig von der Art und Weise wie das Gewebe der Gürtelbandage auf den Gürtel aufgespult wird. Gemäß einer weiteren Ausgestaltung der Gürtelbandage sind die Lücken regelmäßig voneinander beabstandet ausgebildet. Zudem können die Lücken gruppenweise in der Gürtelbandage ausgebildet sein, das heißt es sind mindestens zwei Lücken, vorzugsweise mindestens drei Lücken, nebeneinander angeordnet und anschließend ist in einem Abstand die nächste Lücke oder Gruppe von Lücken angeordnet. Entsprechend können die Lücken gruppenweise regelmäßig voneinander beabstandet ausgebildet sein. Eine Gruppe von Lücken umfasst mindestens zwei Lücken, vorzugsweise mindestens drei Lücken.

In einer Ausgestaltung der Erfindung weisen die Lücken eine Breite von 0,2 bis 1,5 cm auf. Als besonders bevorzugte Ausgestaltung zur Verbesserung der Leitfähigkeit des erfindungsgemäßen Fahrzeugluftreifens haben sich Lücken mit einer Breite von 1 cm herausgestellt. Der Abstand zwischen zwei benachbarten Lücken oder zwei benachbarten Gruppen von Lücken beträgt vorzugsweise von 0,2 bis 1,5 cm. Eine besondere Ausgestaltung der Erfindung sieht vor, dass die Breite einer Lücke gleich dem Abstand zweier benachbarter Lücken ist. Bevorzugt ist die Breite einer Lücke jedoch kleiner als der Abstand zweier Lücken.

Die Karkasse des Fahrzeugluftreifens weist in einer vorteilhaften Ausgestaltung elektrisch leitfähige Karkasskorde auf, beispielsweise aus Stahl oder Kohlenstoff-Fasern. Diese erhöhen die elektrische Leitfähigkeit des Fahrzeugluftreifens. Gemäß einem weiterführenden Gedanken der Erfindung ist ein elektrischer Kontakt zwischen den Leitfähigkeitsstreifen und den elektrisch leitfähigen Karkasskorden der Karkasse durch die Lücken ausgebildet. Mit anderen Worten reichen die gefüllten Lücken der Gürtelbandage bis zu den Karkasskorden. Hierdurch kann die elektrische Leitfähigkeit der Fahrzeugluftreifen beziehungsweise der elektrische Kontakt zwischen Fahrzeugluftreifen und Straßenoberfläche noch weiter verbessert werden. Mit dieser Ausgestaltung kann das Problem umgangen werden, welches sich daraus ergibt, dass bei herkömmlichen Fahrzeugluftreifen die Seitenwände normalerweise aus einer elektrisch nicht-leitenden Gummimischung ausgebildet sind. Trotz der nicht-leitenden Seitenwände ist somit ein elektrischer Kontakt zur Straßenoberfläche gewährleistet.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ausschnittsweise einen Schnitt quer zur Laufrichtung durch einen erfindungsgemäßen Fahrzeugluftreifen,
- Figur 2:: einen weiter vergrößerten Detailausschnitt gemäß der Figur 1,
- Figur 3:: eine Draufsicht auf die Lauffläche des erfindungsgemäßen Fahrzeugluftreifens,
- Figur 4:: einen weiter vergrößerten Detailausschnitt des Fahrzeugluftreifens gemäß der Figur 3
und
- Figur 5:: zwei stark vereinfachte Prinzipdarstellungen der Abfolge von Lücken in der Gürtelbandage.

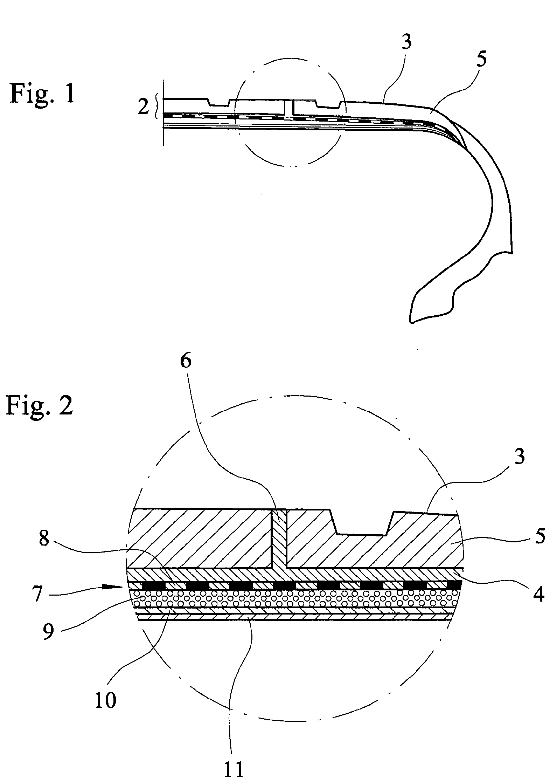

Die Figur 1 zeigt ausschnittsweise einen Schnitt durch einen erfindungsgemäßen Fahrzeugluftreifen quer zu dessen Laufrichtung. Der äußere Laufstreifen 2 mit der profilierten Lauffläche 3 wird gebildet aus der Laufstreifenbasis 4 (Basis) mit mehreren Leitfähigkeitsstreifen 6 und der Laufstreifenkappe 5, wobei in dem gezeigten Ausschnitt lediglich ein Leitfähigkeitsstreifen 6 gezeigt ist. In der hier beispielhaft gezeigten Ausgestaltung besteht die Kappe 5 aus einer nicht-leitenden Gummimischung mit einem hohen Siliziumdioxid-Anteil und die Basis 4 aus einer mit Ruß gefüllten, leitenden Gummimischung. Unterhalb des Laufstreifens 2 sind die nicht-leitende Gürtelbandage 7, der Gürtel 9, die mehrlagige Karkasse 10 und die Innenschicht 11 eingelagert. Diese verschiedenen Bestandteile des Fahrzeugluftreifens sind in der Figur 2 vergrößert dargestellt.

In der Figur 2 ist ein weiter vergrößerter Detailausschnitt des Fahrzeugluftreifens gemäß der Figur 1, im Bereich eines Leitfähigkeitsstreifens 6 gezeigt. Der Leitfähigkeitsstreifen 6 und die Basis 4 sind einstückig aus demselben Material gebildet. In der Gürtelbandage 7 ist eine Vielzahl von Lücken 8 ausgebildet, welche eine Unterbrechung in der Gürtelbandage 7 darstellen. Die Lücken entstehen beim Aufspulen der gewebeartigen Gürtelbandage 7 auf den Gürtel 9. Erfindungsgemäß sind die Lücken 8 mit einem elektrisch leitenden Material gefüllt. In der erfindungsgemäßen Ausgestaltung handelt es sich dabei um dasselbe Material wie die Basis 4, welches während des Herstellungsprozesses des Fahrzeugluftreifens in die Lücken 8 eindringt. Durch die Lücken 8 ist ein elektrischer Kontakt von einer hier nicht gezeigten Straßenoberfläche bis zur Karkasse 10 hergestellt.

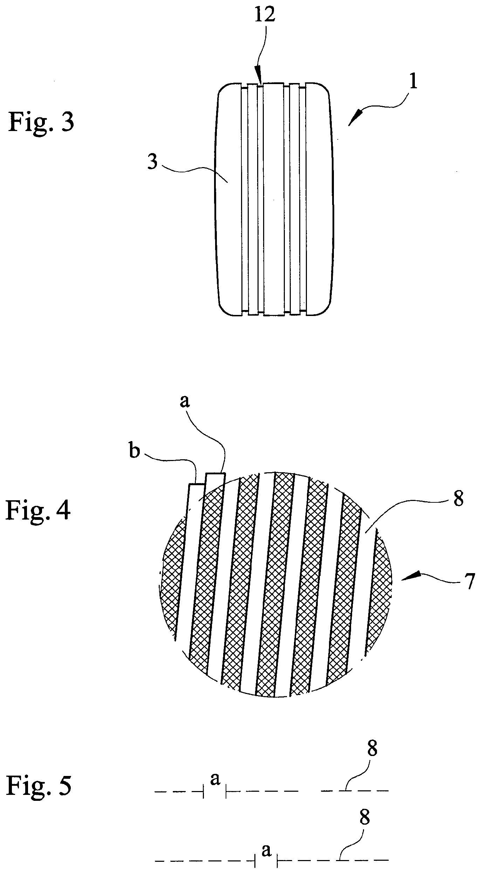

Weiterhin zeigt die Figur 3 eine Draufsicht auf die Lauffläche 3 des erfindungsgemäßen Fahrzeugluftreifens 1. In der Lauffläche 3 ist in dieser Ausgestaltung eine Profilierung in Form von vier Umfangsnuten 12 eingebracht.

Die Figur 4 zeigt zudem einen weiter vergrößerten Detailausschnitt des Fahrzeugluftreifens gemäß der Figur 3. Der Detailausschnitt veranschaulicht ferner eine Draufsicht auf die Gürtelbandage 7. Die Lücken 8 sind in dieser Ausgestaltung in Umfangsrichtung durchgehend ausgebildet. Dabei sind die Lücken 8 regelmäßig voneinander beabstandet. Die Breite b einer Lücke 8 beträgt in dieser Ausgestaltung 1,0 cm, wobei hier die Breite b einer Lücke 8 gleich dem Abstand a zweier Lücken 8 ist.

In der Figur 5 sind noch zwei stark vereinfachte, beispielhafte Prinzipdarstellungen der Abfolge von Lücken 8 in der Gürtelbandage 7 gezeigt. In der oberen Darstellung sind jeweils Gruppen von drei Lücken 8 mit einem regelmäßigen Abstand a ausgebildet, während in der unteren Darstellung Gruppen von acht Lücken 8 mit einem regelmäßigen Abstand a gezeigt sind.

### Bezugszeichenliste

- 1: Fahrzeugluftreifen
- 2: Laufstreifen
- 3: Lauffläche
- 4: Laufstreifenbasis
- 5: Laufstreifenkappe
- 6: Leitfähigkeitsstreifen (CCB)
- 7: Gürtelbandage
- 8: Lücke
- 9: Gürtel
- 10: Karkasse
- 11: Innenschicht
- 12: Umfangsnut

- a: Abstand zwischen zwei benachbarten Lücken oder Gruppen von Lücken
- b: Breite einer Lücke

## Patentansprüche

1. Fahrzeugluftreifen (1) zumindest aufweisend:
- einen Laufstreifen (2) mit einer äußeren Laufstreifenkappe (5) mit einer profilierten Lauffläche (3), einer inneren Laufstreifenbasis (4) und mindestens einen elektrisch leitenden Leitfähigkeitsstreifen (6), welcher in radialer Richtung von der Laufstreifenbasis (4) durch die Laufstreifenkappe (5) bis zur Lauffläche (3) reicht,
- eine unter der Laufstreifenbasis (4) angeordnete, elektrisch nicht-leitende Gürtelbandage (7) mit einer Vielzahl an Lücken (8),
- einen mehrlagigen Gürtel (9),
- eine Karkasse (10) und
- Seitenwände,
**dadurch gekennzeichnet, dass** die Laufstreifenbasis (4) aus einem elektrisch leitenden Material ausgebildet ist und
die Lücken (8) in der Gürtelbandage (7) mit demselben elektrisch leitenden Material gefüllt sind, aus dem die Laufstreifenbasis (4) gebildet ist.

2. Fahrzeugluftreifen (1) nach Anspruch 1,
**dadurch gekennzeichnet, dass**
die Lücken (8) mit einer elektrisch leitfähigen Gummimischung gefüllt sind.

3. Fahrzeugluftreifen (1) nach einem der vorstehend genannten Ansprüche,
**dadurch gekennzeichnet, dass**
der mindestens eine Leitfähigkeitsstreifen (6) aus einem anderen, elektrisch leitenden Material ausgebildet ist, als die Laufstreifenbasis (4).

4. Fahrzeugluftreifen (1) nach einem der vorstehend genannten Ansprüche,
**dadurch gekennzeichnet, dass**
die Gürtelbandage (7) mindestens eine Lage eines Gewebes aufweist.

5. Fahrzeugluftreifen (1) nach Anspruch 4, **dadurch gekennzeichnet, dass**
ein Gewebe der Gürtelbandage (7) aus einem der folgenden Materialien ausgebildet ist: Nylon oder Hybridmaterialien aus Nylon und Aramid.

6. Fahrzeugluftreifen (1) nach einem der vorstehend genannten Ansprüche,
**dadurch gekennzeichnet, dass**
die Lücken (8) eine Gesamtfläche von mindestens 10 mm² ausbilden.

7. Fahrzeugluftreifen (1) nach einem der vorstehend genannten Ansprüche,
**dadurch gekennzeichnet, dass**
die Lücken (8) regelmäßig voneinander beabstandet ausgebildet sind.

8. Fahrzeugluftreifen (1) nach Anspruch 7,
**dadurch gekennzeichnet, dass**
die Lücken (8) gruppenweise regelmäßig voneinander beabstandet ausgebildet sind.

9. Fahrzeugluftreifen (1) nach einem der vorstehend genannten Ansprüche,
**dadurch gekennzeichnet, dass**
eine Lücke (8) eine Breite (b) von 0,2 bis 1,5 cm aufweist.

10. Fahrzeugluftreifen (1) nach Anspruch 9,
**dadurch gekennzeichnet, dass**
die Breite (b) einer Lücke (8) 1,0 cm beträgt.

11. Fahrzeugluftreifen (1) nach einem der vorstehend genannten Ansprüche,
**dadurch gekennzeichnet, dass**
ein Abstand (a) zwischen zwei benachbarten Lücken (8) oder zwei benachbarten Gruppen von Lücken (8) von 0,2 bis 1,5 cm beträgt.

12. Fahrzeugluftreifen (1) nach einem der vorstehend genannten Ansprüche,
**dadurch gekennzeichnet, dass**
die Karkasse (10) elektrisch leitfähige Karkasskorde aufweist, wobei durch die Lücken (8) ein elektrischer Kontakt zwischen den Leitfähigkeitsstreifen (6) und den elektrisch leitfähigen Karkasskorden der Karkasse (10) ausgebildet ist.

## Claims

1. Pneumatic vehicle tire (1), at least having:
- a tread (2) with an outer tread cap (5) with a profiled tread surface (3), an inner tread base (4) and at least one electrically conductive conductivity strip (6), which extends in a radial direction from the tread base (4), through the tread cap (5), to the tread surface (3),
- an electrically non-conductive belt bandage (7), which is arranged under the tread base (4) and has a multiplicity of gaps (8),
- a multi-ply belt (9),
- a carcass (10) and
- side walls,
**characterized in that**
the tread base (4) is formed from an electrically conductive material and the gaps (8) in the belt bandage (7) are filled with the same electrically conductive material from which the tread base (4) is formed.

2. Pneumatic vehicle tire (1) according to Claim 1,
**characterized in that**
the gaps (8) are filled with an electrically conductive rubber compound.

3. Pneumatic vehicle tire (1) according to one of the preceding claims,
**characterized in that**
the at least one conductivity strip (6) is formed from a different electrically conductive material than the tread base (4).

4. Pneumatic vehicle tire (1) according to one of the preceding claims,
**characterized in that**
the belt bandage (7) has at least one ply of a woven fabric.

5. Pneumatic vehicle tire (1) according to Claim 4,
**characterized in that**
a woven fabric of the belt bandage (7) is formed from one of the following materials: nylon or hybrid materials composed of nylon and aramid.

6. Pneumatic vehicle tire (1) according to one of the preceding claims,
**characterized in that**
the gaps (8) form a total area of at least 10 mm².

7. Pneumatic vehicle tire (1) according to one of the preceding claims,
**characterized in that**
the gaps (8) are formed at regular intervals from one another.

8. Pneumatic vehicle tire (1) according to Claim 7,
**characterized in that**
the gaps (8) are formed in groups at regular intervals from one another.

9. Pneumatic vehicle tire (1) according to one of the preceding claims,
**characterized in that**
a gap (8) has a width (b) of 0.2 to 1.5 cm.

10. Pneumatic vehicle tire (1) according to Claim 9,
**characterized in that**
the width (b) of a gap (8) is 1.0 cm.

11. Pneumatic vehicle tire (1) according to one of the preceding claims,
**characterized in that**
a distance (a) between two adjacent gaps (8) or two adjacent groups of gaps (8) is from 0.2 to 1.5 cm.

12. Pneumatic vehicle tire (1) according to one of the preceding claims,
**characterized in that**
the carcass (10) has electrically conductive carcass cords, wherein electrical contact between the conductivity strips (6) and the electrically conductive carcass cords of the carcass (10) is formed by the gaps (8) .

## Revendications

1. Pneumatique de véhicule (1) comportant au moins :
- une bande de roulement (2) présentant une chape extérieure (5) ayant une semelle à sculptures (3), une base intérieure (4) et au moins une bande de conduction électroconductrice (6) qui s'étend dans la direction radiale depuis la base (4) jusqu'à la semelle (3) à travers la chape (5),
- un bandage de ceinture (7) non électroconducteur disposé sous la base (4) et comportant une pluralité d'interstices (8),
- une ceinture multicouche (9),
- une carcasse (10) et
- des flancs,
**caractérisé en ce que** la base (4) est constituée d'un matériau électroconducteur et les interstices (8) dans le bandage de ceinture (7) sont remplis du même matériau électroconducteur que celui dont est constituée la base (4) .

2. Pneumatique de véhicule (1) selon la revendication 1,
**caractérisé en ce que** les interstices (8) sont remplis d'un mélange de caoutchouc électroconducteur.

3. Pneumatique de véhicule (1) selon l'une des revendications précédentes,
**caractérisé en ce que** ladite au moins une bande de conduction (6) est constituée d'un autre matériau électroconducteur que celui de la base (4).

4. Pneumatique de véhicule (1) selon l'une des revendications précédentes,
**caractérisé en ce que** le bandage de ceinture (7) comprend au moins une couche de tissu.

5. Pneumatique de véhicule (1) selon la revendication 4,
**caractérisé en ce qu'**un tissu du bandage de ceinture (7) est constitué de l'un des matériaux suivants : du nylon ou des matériaux hybrides de nylon et d'aramide.

6. Pneumatique de véhicule (1) selon l'une des revendications précédentes,
**caractérisé en ce que** les interstices (8) forment une surface totale d'au moins 10 mm².

7. Pneumatique de véhicule (1) selon l'une des revendications précédentes,
**caractérisé en ce que** les interstices (8) sont régulièrement espacés les uns des autres.

8. Pneumatique de véhicule (1) selon la revendication 7,
**caractérisé en ce que** les interstices (8) sont régulièrement espacés les uns des autres par groupes.

9. Pneumatique de véhicule (1) selon l'une des revendications précédentes,
**caractérisé en ce qu'**un interstice (8) présente une largeur (b) de 0,2 à 1,5 cm.

10. Pneumatique de véhicule (1) selon la revendication 9,
**caractérisé en ce que** la largeur (b) d'un interstice (8) est de 1,0 cm.

11. Pneumatique de véhicule (1) selon l'une des revendications précédentes,
**caractérisé en ce qu'**une distance (a) entre deux interstices adjacents (8) ou deux groupes d'interstices adjacents (8) est de 0,2 à 1,5 cm.

12. Pneumatique de véhicule (1) selon l'une des revendications précédentes,
**caractérisé en ce que** la carcasse (10) comporte des cordons de carcasse électroconducteurs, dans lequel un contact électrique entre les bandes de conduction (6) et les cordons électroconducteurs de la carcasse (10) est réalisé par l'intermédiaire des interstices (8).
